(19) Europäisches Patentamt / European Patent Office / Office européen des brevets

(11) **EP 2 099 866 B1**

(12) # EUROPÄISCHE PATENTSCHRIFT


(45) Veröffentlichungstag und Bekanntmachung des Hinweises auf die Patenterteilung:
**23.09.2015 Patentblatt 2015/39**

(21) Anmeldenummer: **07857254.2**

(22) Anmeldetag: **05.12.2007**

(51) Int Cl.:
***C08L 77/00*** *(2006.01)* ***C08L 77/02*** *(2006.01)*
***C08L 77/06*** *(2006.01)* ***C08L 13/00*** *(2006.01)*
***C08L 25/12*** *(2006.01)*

(86) Internationale Anmeldenummer:
**PCT/EP2007/063329**

(87) Internationale Veröffentlichungsnummer:
**WO 2008/071603 (19.06.2008 Gazette 2008/25)**


(54) **POLYAMIDE MIT ACRYLATKAUTSCHUKEN**
POLYAMIDES WITH ACRYLATE RUBBERS
POLYAMIDES AVEC CAOUTCHOUCS D'ACRYLATE


(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.12.2006 EP 06125991**

(43) Veröffentlichungstag der Anmeldung:
**16.09.2009 Patentblatt 2009/38**



(73) Patentinhaber: **BASF SE**
**67056 Ludwigshafen (DE)**

(72) Erfinder:
- **WEBER, Martin**
  **67487 Maikammer (DE)**
- **VENKATESH, Rajan**
  **68167 Mannheim (DE)**



(56) Entgegenhaltungen:
**WO-A-00/69929 WO-A-2006/020402**


EP 2 099 866 B1


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft thermoplastische Formmassen, enthaltend
A) 10 bis 95 Gew.-% eines thermoplastischen Polyamides,
B) 5 bis 90 Gew.-% eines Acrylatkautschukes, erhältlich durch radikalisch initiierte wässrige Emulsionspolymerisation von ethylenisch ungesättigten Monomeren in Anwesenheit wenigstens eines Dispergiermittels und wenigstens eines Radikal-initiators, wobei zur Emulsionspolymerisation

| | |
|---|---|
| 1 bis 50 Gew.-% | eines 5 bis 12 C-Atome aufweisenden Alkens [Monomer A], und |
| 50 bis 99 Gew.-% | eines Esters auf Basis einer 3 bis 6 C-Atome aufweisenden $\alpha,\beta$-monoethylenisch ungesättigten Mono- oder Dicarbonsäure und eines 1 bis 12 C-Atome aufweisenden Alkanols [Monomer B], sowie gegebenenfalls |
| bis 10 Gew.-% | einer 3 bis 6 C-Atome aufweisenden $\alpha,\beta$-monoethylenisch ungesättigten Mono- oder Dicarbonsäure und/oder deren Amid [Monomer C] und |
| bis 30 Gew.-% | einer sich von den Monomeren A bis C unterscheidenden $\alpha,\beta$-ethylenisch ungesättigten Verbindung [Monomer D], |

eingesetzt werden und sich die Monomeren A bis D zu 100 Gew.-% addieren,
C) 0 bis 40 Gew.-% eines Copolymerisates, welches vinylaromatische Monomereinheiten enthält und
D) 0 bis 70 Gew.-% weiterer Zusatzstoffe,wobei die Summe der Gewichtsprozente A) bis D) 100 % ergibt.

Außerdem betrifft die vorliegende Erfindung die Verwendung derartiger Formmassen zur Herstellung von Formkörpern, Fasern und Folien sowie die hierbei erhältlichen Formkörper jeglicher Art.

Die Schlagzähmodifizierung von Polyamiden ist seit Jahren Gegenstand vieler Untersuchungen (S. Wu, Polym. Eng. Sci., 27, S. 335, 1987). In den kommerziell verfügbaren Produkten werden im wesentlichen Olefinkautschuke als Zähmodifier verwendet. Zur Kompatibilisierung mit der PA-Matrix werden in der Regel funktionalisierte Olefin-kautschuke, wie z.B. EPDM-g-MA, EPR-g-MA, SBS-g-MA verwendet (R. Gaymans, in Polymer Blends, Vol 2, 177-224, 2000, Eds. D.R. Paul, C.B. Bucknall).

Kern-Schale-Kautschuke werden bisher eher selten zur Schlagzähmodifizierung von Polyamiden verwendet (C.A. Cruz-Ramos, in Polymer Blends, Vol. 2, 137-175, 2000, Eds. D.R. Paul, C.B. Bucknall), da insbesondere die Acrylatmodifier aufgrund ihrer Glastemperatur von ca. -40°C bis -30°C nicht mehr wirksam sind.

Für viele Anwendungen weisen bisher bekannte zähmodifizierte PA-Formmassen ungenügende UV-Beständigkeit auf.

In der DE-A 10 2005 046 692.3 wird ein neues Verfahren zur Herstellung von Emulsionspolymerisaten auf Basis von Acrylatmonomeren vorgeschlagen.

Aufgabe der vorliegenden Erfindung war daher, thermoplastische Formmassen auf Basis von Polyamiden mit hoher Zähigkeit und verbesserter UV-Beständigkeit bereitzustellen.

Dem gemäß wurden die eingangs definierten Formmassen gefunden.

Bevorzugte Ausführungsformen sind den Unteransprüchen zu entnehmen.

Als Komponente A) enthalten die erfindungsgemäßen Formmassen 10 bis 95, vorzugsweise 20 bis 94 und insbesondere 30 bis 85 Gew.-% mindestens eines Polyamides.

Die Polyamide der erfindungsgemäßen Formmassen weisen im allgemeinen eine Viskositätszahl von 70 bis 350, vorzugsweise 70 bis 170 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:

| | |
|---|---|
| PA 4 | Pyrrolidon |
| PA 6 | ε-caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin/Terephthalsäure |
| PA MXD6 | m-Xylylendiamin, Adipinsäure |

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Die thermoplastischen Formmassen enthalten als Komponente B) erfindungsgemäß 5 bis 90, vorzugsweise 5 bis 40 und insbesondere 10 bis 30 Gew.-% eines Acrylatkautschukes, erhältlich durch radikalisch initiierte wässrige

Emulsionspolymerisation von ethylenisch ungesättigten Monomeren in Anwesenheit wenigstens eines Dispergiermittels und wenigstens eines Radikalinitiators, welches dadurch gekennzeichnet ist, dass zur Emulsionspolymerisation

| | |
|---|---|
| 1 bis 50 Gew.-% | eines 5 bis 12 C-Atome aufweisenden Alkens [Monomer A], und |
| 50 bis 99 Gew.-% | eines Esters auf Basis einer 3 bis 6 C-Atome aufweisenden α,β-monoethylenisch ungesättigten Mono- oder Dicarbonsäure und eines 1 bis 12 C-Atome aufweisenden Alkanols [Monomer B], sowie gegebenenfalls |
| bis 10 Gew.-% | einer 3 bis 6 C-Atome aufweisenden α,β-monoethylenisch ungesättigten Mono- oder Dicarbonsäure und/oder deren Amid [Monomer C] und |
| bis 30 Gew.-% | einer sich von den Monomeren A bis C unterscheidenden α,β-ethylenisch ungesättigten Verbindung [Monomer D], |

eingesetzt werden und sich die Monomeren A bis D zu 100 Gew.-% addieren.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch induzierte wässrige Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert. Von dieser Verfahrensweise unterscheidet sich das vorliegende Verfahren lediglich im Einsatz einer spezifischen Monomerenzusammensetzung.

Als Monomere A können alle linearen oder cyclischen 5 bis 12 C-Atome, bevorzugt 5 bis 10 C-Atome und insbesondere bevorzugt 6 bis 8 C-Atome aufweisenden Alkene eingesetzt werden, welche sich radikalisch copolymerisieren lassen und welche neben Kohlenstoff und Wasserstoff keine weiteren Elemente aufweisen. Hierzu zählen beispielsweise die linearen Alkene 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1,3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5,

4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Ddoecen-4, Dodecen-5 oder Dodecen-6 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo [2.2.2]octen-2, Bicyclo[3.3.1]nonen-2 oder Bicyclo[3.2.2]nonen-6.

Bevorzugt werden die 1-Alkene eingesetzt, beispielsweise Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1 oder 2-Methylocten-1. Vorteilhaft wird als Monomer A ein 6 bis 8 C-Atome aufweisendes Alken, bevorzugt ein 6 bis 8 C-Atome aufweisendes 1-Alken eingesetzt. Insbesondere bevorzugt werden Hexen-1, Hepten-1 oder Octen-1 eingesetzt. Selbstverständlich können auch Gemische vorgenannter Monomere A eingesetzt werden.

Als Monomere B finden Ester auf Basis einer 3 bis 6 C-Atome, insbesondere einer 3 oder 4 C-Atome aufweisenden $\alpha,\beta$-monoethylenisch ungesättigten Mono- oder Dicarbonsäure, wie insbesondere Acrylsäure, Methacrylsäure, Maleinsäure, Fumarsäure und Itaconsäure und eines 1 bis 12 C-Atome aufweisenden Alkanols, vorzugsweise eines 1 bis 8 C-Atome aufweisenden Alkanols und insbesondere eines 1 bis 4 C-Atome aufweisenden Alkanols, wie insbesondere Methanol, Ethanol, n-Propanol, iso-Propanol, n-Butanol, 2-Methylpropanol-1, tert.-Butanol, n-Pentanol, 3-Methylbutanol-1, n-Hexanol, 4-Methylpentanol-1, n-Heptanol, 5-Methylhexanol-1, n-Octanol, 6-Methylheptanol-1, n-Nonanol, 7-Methyloctanol-1, n-Decanol, 8-Methylnonanol-1, n-Dodecanol, 9-Methyldecanol-1 oder 2-Ethylhexanol-1 Verwendung. Vorzugsweise werden Acrylsäure- und Methacrylsäuremethyl-, -ethyl-, -n-butyl-, -iso-butyl-, pentyl-, - hexyl-, -heptyl-, -octyl-, -nonyl-, -decyl-, -2-ethylhexyl-, oder dodecylester, Fumar- und Maleinsäuredimethylester oder -di-n-butylester eingesetzt. Selbstverständlich können auch Gemische vorgenannter Ester eingesetzt werden.

Als Monomere C werden optional 3 bis 6 C-Atome aufweisende $\alpha,\beta$-monoethylenisch ungesättigte Mono- oder Dicarbonsäuren und/oder deren Amide, wie insbesondere Acrylsäure, Methacrylsäure, Maleinsäure, Fumarsäure oder Itaconsäure bzw. Acrylamid oder Methacrylamid eingesetzt. Selbstverständlich können auch Gemische vorgenannter Monomere C eingesetzt werden.

Als Monomere D, welche sich von den Monomeren A bis C unterscheiden, finden beispielsweise $\alpha,\beta$-ethylenisch ungesättigte Verbindungen, wie beispielsweise vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyln-butyrat, Vinyllaurat und Vinylstearat, Nitrile $\alpha,\beta$-mono- oder diethylenisch ungesättigter Carbonsäuren, wie Acrylnitril, Methacrylnitril, Fumarsäuredinitril, Maleinsäuredinitril sowie 4 bis 8 C-Atome aufweisende konjugierte Diene, wie 1,3-Butadien und Isopren, darüber hinaus Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid oder 2-(1-Imidazolin-2-onyl)ethylmethacrylat Verwendung. Weitere Monomere D weisen wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylen-glykoldiacrylat, 1,3-Propylen-glykoldiacrylat, 1,3-Butylenglykoldiacrylat, 1,4-Butylen-glykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykol-dimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienyl-acrylat, Triallylcyanurat oder Triallylisocyanurat. In diesem Zusammenhang von besonderer Bedeutung sind auch die Methacrylsäure- und Acrylsäure-$C_1$-$C_8$-Hydroxy-alkylester wie n-Hydroxyethyl-, n-Hydroxypropyl- oder n-Hydroxybutylacrylat und

-methacrylat sowie Verbindungen wie Glycidylacrylat oder -methacrylat, Diacetonacryl-amid und Acetylacetoxyethylacrylat bzw. -methacrylat. Selbstverständlich können auch Gemische von Monomeren D eingesetzt werden.

Bevorzugt werden jedoch zur radikalisch initiierten wässrigen Emulsionspolymerisation

| | |
|---|---|
| 1 bis 49,99 Gew.-% | Monomere A, und |
| 50 bis 98,99 Gew.-% | Monomere B, sowie |
| 0,01 bis 10 Gew.-% | Monomere C |

eingesetzt. Als Monomere A werden insbesondere Penten-1, Hexen-1, Hepten-1, Octen-1, 3-Methylhexen-1, 3-Methylhepten-1 und/oder 3-Methylocten-1, als Monomere B insbesondere n-Butylacrylat, Methylacrylat, 2-Ethylhexylacrylat, Methylmethacrylat und/oder tert.-Butylacrylat und als Monomere C insbesondere Acrylsäure, Methacrylsäure und/oder Itaconsäure eingesetzt.

Insbesondere bevorzugt werden zur radikalisch initiierten wässrigen Emulsions-polymerisation

| | |
|---|---|
| 5 bis 40 Gew.-% | Penten-1, Hexen-1 und/oder Octen-1 [Monomere A], und |
| 56 bis 94,9 Gew.-% | n-Butylacrylat, Methylacrylat, 2-Ethylhexylacrylat, Methylmethacrylat und/oder tert.-Butylacrylat [Monomere B], sowie |
| 0,1 bis 4 Gew.-% | Acrylsäure und/oder Methacrylsäure [Monomere C], |

eingesetzt.

Dabei kann jeweils wenigstens eine Teilmenge der Monomeren A bis D im wässrigen Reaktionsmedium vorgelegt werden und die gegebenenfalls verbliebene Restmenge dem wässrigen Reaktionsmedium, nach Initiierung der radikalischen Polymerisations-reaktion, diskontinuierlich in einer Portion, diskontinuierlich in mehreren Portionen sowie kontinuierlich mit gleichbleibenden oder sich verändernden Mengenströmen zugegeben werden. Es ist aber auch möglich, im wässrigen Reaktionsmedium wenigstens eine Teilmenge des radikalischen Polymerisationsinitiators vorzulegen, das erhaltene wässrige Reaktionsmedium auf Polymerisationstemperatur aufzuheizen und bei dieser Temperatur die Monomeren A bis D dem wässrigen Reaktionsmedium diskontinuierlich in einer Portion, diskontinuierlich in mehreren Portionen sowie kontinuierlich mit gleichbleibenden oder sich verändernden Mengenströmen zuzugeben. Insbesondere vorteilhaft werden die Monomeren A bis D dem wässrigen Reaktionsmedium in Form einer Mischung zugegeben. Mit Vorteil erfolgt die Zugabe der Monomeren A bis D in Form einer wässrigen Monomerenemulsion.

Erfindungsgemäß werden im Rahmen des vorliegenden Verfahrens Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür

sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkohol-ethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

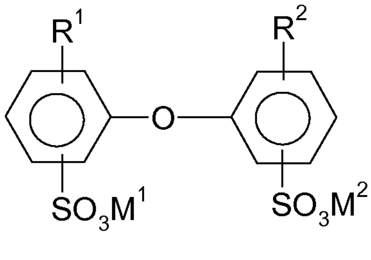

(I)

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluoro-phenyl)borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge $\geq 0{,}005$ und $\leq 10$ Gew.-%, vorzugsweise $\geq 0{,}01$ und $\leq 5$ Gew.-%, insbesondere $\geq 0{,}1$ und $\leq 3$ Gew.-%, jeweils bezogen auf die Monomerengesamtmenge, eingesetzt.

Die Gesamtmenge der als Dispergiermittel zusätzlich oder statt der Emulgatoren eingesetzten Schutzkolloide beträgt oft $\geq 0{,}1$ und $\leq 10$ Gew.-% und häufig $\geq 0{,}2$ und $\leq 7$ Gew.-%, jeweils bezogen die Monomerengesamtmenge.

Bevorzugt werden jedoch anionische und/oder nichtionische Emulgatoren und insbesondere bevorzugt anionische Emulgatoren als Dispergiermittel eingesetzt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-butyl- oder Dicumylperoxid eingesetzt werden. Als Azoverbindung finden

im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Monomerengesamtmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Reaktionsmedium vorgelegt werden. Es ist aber auch möglich, gegebenenfalls lediglich eine Teilmenge des Radikalinitiators im wässrigen Reaktionsmedium vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Als Reaktionstemperatur für die erfindungsgemäße radikalische wässrige Emulsionspolymerisation kommt der gesamte Bereich von 0 bis 170°C in Betracht. Dabei werden in der Regel Temperaturen von 50 bis 120°C, häufig 60 bis 110°C und oft 70 bis 100°C angewendet. Die erfindungsgemäße radikalische wässrige Emulsionspolymerisation kann bei einem Druck kleiner, gleich oder größer 1 bar (absolut) durchgeführt werden, so dass die Polymerisationstemperatur 100°C übersteigen und bis zu 170°C betragen kann. Vorzugsweise werden leichtflüchtige Monomere, wie beispielsweise 2-Methylbuten-1, 3-Methylbuten-1, 2-Methylbuten-2, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsions-polymerisation bei 1 atm (1,01 bar absolut) unter Inertgasatmosphäre, wie beispielsweise unter Stickstoff oder Argon durchgeführt.

Das wässrige Reaktionsmedium kann prinzipiell in untergeordneten Mengen auch wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlor-methan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymer Handbook 3rd edition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldehyd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die optional eingesetzte Gesamtmenge der radikal-kettenübertragenden Verbindungen, bezogen auf die Monomerengesamtmenge, ist in der Regel $\leq$ 5 Gew.-%, oft $\leq$ 3 Gew.-% und häufig $\leq$ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis D während der Polymerisation zugeführt werden.

Die nach dem erfindungsgemäßen Verfahren zugänglichen Polymerisate können prinzipiell Glasübergangstemperaturen im Bereich von -70 bis +150°C, oft -30 bis +100°C und häufig -20 bis +50°C aufweisen. Häufig werden die Monomeren A bis D so gewählt, dass Polymerisate mit einem $T_g$-Wert $\leq$ +10°C, $\leq$ 0°C, $\leq$ -10°C, $\leq$ -20°C, $\leq$ -30°C,

≤ -40°C oder ≤ -50°C gebildet werden. Es können aber auch Polymerisate hergestellt werden, deren Glasübergangstemperaturen zwischen -70 und +10°C, zwischen -60 und -10°C oder zwischen -50 und -20°C liegen. Unter Glasübergangstemperatur wird hier die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, ..... $T_g^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Monomerengesamtmenge, erfolgen.

Eine Polymersaat wird insbesondere dann eingesetzt, wenn die Teilchengröße der mittels radikalisch wässriger Emulsionspolymerisation herzustellender Polymerpartikel gezielt eingestellt werden soll (siehe hierzu beispielsweise US-A 2,520,959 und US-A 3,397,165).

Insbesondere wird eine Polymersaat eingesetzt, deren Polymersaatpartikel eine enge Teilchengrößenverteilung und gewichtsmittlere Durchmesser $D_w$ ≤ 100 nm, häufig ≥ 5 nm bis ≤ 50 nm und oft ≥ 15 nm bis ≤ 35 nm aufweisen. Die Bestimmung der gewichts-mittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion; sie sind daher als Gew.-Teile Polymersaatfeststoff, bezogen auf die Monomerengesamtmenge, angegeben.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50°C, häufig ≥ 60°C oder ≥ 70°C und oft ≥ 80°C oder ≥ 90°C eingesetzt. Insbesondere bevorzugt ist eine Polystyrol- oder eine Polymethylmethacrylat-Polymersaat.

Die Gesamtmenge an Fremdpolymersaat kann vor Beginn der Zugabe der Monomeren A bis D im Reaktionsgefäß vorgelegt werden. Es ist aber auch möglich, lediglich eine Teilmenge der Fremdpolymersaat vor Beginn der

Zugabe der Monomeren A bis D im Reaktionsgefäß vorzulegen und die verbleibende Restmenge während der Polymerisation zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Beginn der Zugabe der Monomeren A bis D im Reaktionsgefäß vorgelegt.

Die erfindungsgemäß erhaltene wässrige Polymerisatdispersion weist üblicherweise einen Polymerisatfeststoffgehalt von ≥ 10 und ≤ 80 Gew.-%, häufig ≥ 20 und ≤ 70 Gew.-% und oft ≥ 25 und ≤ 60 Gew.-%, jeweils bezogen auf die wässrige Polymerisat-dispersion, auf. Der über quasielastische Lichtstreuung (ISO-Norm 13 321) ermittelte zahlenmittlere Teilchendurchmesser (cumulant z-average) liegt in der Regel zwischen 10 und 2000 nm, häufig zwischen 20 und 1000 nm und oft zwischen 100 und 700 nm bzw. 100 bis 400 nm.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115] herabgesetzt.

Es besteht aber auch die Möglichkeit, die Komponente B) in Substanz bei der Konfektionierung mit A) einzuarbeiten, d.h. das Lösungsmittel wird abgetrennt und der Feststoff eingearbeitet.

Als Komponente C enthalten die erfindungsgemäßen Formmassen 0 bis 40, bevorzugt von 1 bis 30, und insbesondere 1 bis 15 Gew.-%, bezogen auf das Gesamtgewicht der Formmassen eines oder eine Mischung aus zwei oder mehreren unterschiedlichen Copolymerisaten, die vinylaromatische Monomere enthalten. Bevorzugt werden Copolymerisate auf der Basis von Styrol oder substituierten Styrolen und ungesättigten Nitrilen.

Besonders bevorzugte erfindungsgemäße Formmassen enthalten die Komponente C in Anteilen von 2 bis 50 Gew.-%, bezogen auf das Gesamtgewicht der Formmassen.

Als Copolymerisate kommen sowohl statistische als auch Blockcopolymerisate in Betracht. Beispiele geeigneter Copolymerisate sind Polystyrol-co-Acrylnitril oder Terpolymere auf der Basis von Styrol, Acrylnitril und N-Phenylmaleinimid oder Oxazolingruppen enthaltende Copolymerisate.

Die Copolymerisate C sind besonders bevorzugt aus

$c_1$) 60 bis 95 Gew.-%, vorzugsweise 65 bis 85 Gew.-% Styrol oder substituierten Styrolen der allgemeinen Formel I oder deren Mischungen und

$c_2$) 5 bis 40 Gew.-%, vorzugsweise 15 bis 35 Gew.-% mindestens eines ungesättigten Nitrils, bevorzugt Acrylnitril oder Methacrylnitril oder deren Mischungen

aufgebaut.

Die Copolymerisate C sind harzartig, thermoplastisch und kautschukfrei. Besonders bevorzugte Copolymerisate C sind solche aus Styrol und Acrylnitril, aus $\alpha$-Methylstyrol und Acrylnitril oder aus Styrol, $\alpha$-Methylstyrol und Acrylnitril.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepfropft werden.

Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160, bevorzugt 60 bis 110 ml/g (gemessen in 0,5 gew.-%iger Lösung in Dimethylformamid bei 23°C) auf, dies entspricht mittleren Molekulargewichten $M_w$ (Gewichtsmittelwert) von 40 000 bis 2 000 000.

Nach einer der bevorzugten Ausführungsformen basieren die Copolymeren C auf einer vinylaromatischen Verbindung (c1) und enthalten als Einheiten (c2) Dicarbonsäureanhydride (c21) oder Dicarbonsäureimide (c22) oder Mischungen aus c21) und c22) und Einheiten (c3), die sich von weiteren Monomeren ableiten, die keine Gruppen enthalten, die mit den Endgruppen des Polyamides reagieren, oder nur um ein vielfaches langsamer.

Gemäß dieser Ausführungsform beträgt der Anteil der Einheiten c1) bevorzugt von 50 bis 85, insbesondere von 60 bis 80 Gew.-%. Ganz besonders bevorzugt enthalten die Copolymeren C) von 65 bis 78 Gew.-% Einheiten, die sich von aromatischen Vinylverbindungen ableiten. Die Gew.-% Angaben sind jeweils bezogen auf das Gesamtgewicht von c1) bis c3).

Der Anteil der Einheiten c21), die sich von $\alpha,\beta$-ungesättigten Dicarbonsäureanhydriden ableiten, beträgt bevorzugt von 0,3 bis 25 Gew.-%. Copolymere C) mit wesentlich weniger als 0,3 Gew.-%, beispielsweise solche mit weniger als 0,1 Gew.-% der Einheiten c21) sind im Allgemeinen nicht hinreichend reaktionsfähig. Solche mit wesentlich mehr als 25 Gew.-% lassen sich meist nicht mehr gut verarbeiten, da sie zu stark vernetzend wirken. Bevorzugt enthalten die Copolymeren C) von 0,5 bis 15 Gew.-%, insbesondere von 0,7 bis 10 Gew.-%, ganz besonders bevorzugt von 0,8 bis 5 Gew.-% c21), beispielsweise von 1 bis 3 Gew.-% c21). Die Gew.-% Angaben beziehen sich dabei jeweils auf das Gesamtgewicht der Einheiten c1) bis c3).

Anstelle der Einheiten c21) oder, wie es bevorzugt ist, darüber hinaus können die Copolymeren C) Einheiten c22) enthalten, die sich von α,β-ungesättigten, insbesondere cyclischen Dicarbonsäureimiden ableiten. Diese sind im allgemeinen von 0 bis 49,7 Gew.-% in den Copolymeren C) enthalten. Bevorzugte Copolymere C) enthalten von 0 bis 39,5 Gew.-% c22), insbesondere von 0 bis 34,2 Gew.-%, wobei sich die Gew.-% Angaben jeweils auf das Gesamtgewicht der Einheiten c1 bis c3) bezieht.

Enthalten die Copolymeren kein c22) können die Copolymere C) noch 14,7 bis 40 Gew.-%, bevorzugt 19,5 bis 35 Gew.-%, insbesondere 21,3 bis 33 Gew.-% Einheiten c3), bezogen auf das Gesamtgewicht der Einheiten c1) bis c3), enthalten, die sich von weiteren radikalisch polymerisierbaren Verbindungen ableiten.

Als aromatische Vinylverbindungen c1) kommen vor allem Styrol und Styrolderivate in Betracht. Zu den geeigneten Styrolderivaten zählen α-Methylstyrol oder am aromatischen Kern substituierte Styrolderivate wie Vinyltoluol, t-Butylstyrol oder Chlorstyrol. Selbstverständlich können auch Mischungen unterschiedlicher aromatischer Vinylverbindungen eingesetzt werden. Ganz besonders bevorzugt wird Styrol verwendet.

Zu den bevorzugten α,β-ungesättigten Dicarbonsäureanhydriden c21) zählen cyclische und zwar solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder Itakonsäureanhydrid besonders bevorzugt. Mischungen unterschiedlicher Dicarbonsäureanhydride können ebenfalls verwendet werden. Ganz besonders bevorzugt wird Maleinsäureanhydrid alleine eingesetzt.

Im allgemeinen entsprechen die α,β-ungesättigten Dicarbonsäureimide c22) den obengenannten Dicarbonsäureanhydriden. Der Substituent am Stickstoff ist in der Regel ein $C_1$-bis $C_{20}$-Alkyl, $C_4$-bis $C_{20}$-Cycloalkyl, $C_1$-bis $C_{10}$-Alkyl-$C_6$-bis $C_{18}$-Aryl oder ein $C_6$-bis $C_{18}$-Arylrest.

Die Alkylreste können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind z.B. Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Alkylarylreste kann sowohl linear als auch verzweigt sein und die Alkylarylreste können auch Substituenten haben. Beispiele derartiger Substituenten sind Alkylgruppen wie Methyl oder Ethyl aber auch Halogenatome wie Chlor oder Brom. Als Alkylarylreste können beispielsweise Benzyl, Ethylphenyl oder p-Chlorbenzyl verwendet werden. Ebenso können die Arylreste substituiert oder unsubstituiert sein, wobei z.B. Alkylgruppen wie Methyl oder Ethyl oder Halogenatome wie Chlor oder Brom geeignete Substituenten sind. Zu den bevorzugten Arylresten zählen Phenyl und Naphthyl. Ganz besonders bevorzugte Reste sind Cyclohexyl oder Phenyl.

Beispielhaft für Einheiten c3) seien hier Acrylsäure und Acrylsäurederivate wie Methacrylsäure, Acrylsäurealkylester wie Acrylsäureethylester, Methacrylsäuremethylester, Methacrylsäureethylester oder Methyacrylsäurecyclohexylester oder ungesättigte Nitrile wie Acrylnitril, Methacrylnitril genannt. Mischungen dieser Monomeren kommen ebenfalls in Betracht. Ganz besonders bevorzugt wird Acrylnitril alleine verwendet.

Als bevorzugte Copolymeren C) dieser Ausführungsform sind beispielhaft die mit der folgenden Zusammensetzung genannt:

Copolymere, die

c1) von 50 bis 85 bevorzugt von 60 bis 81 Gew.-% Styrol,
c2) von 0,5 bis 10 bevorzugt von 1 bis 5 Gew.-% Maleinsäureanhydrid und
c3) von 14,5 bis 40 , bevorzugt von 18 bis 35 Gew.-% Acrylnitril

enthalten, wobei sich die Anteile von c1) bis c3) zu 100 Gew.-% addieren.

Die Copolymeren C) dieser Ausführungsform enthalten die Einheiten c1) bis c3) bevorzugt in einer statistischen Verteilung. In der Regel weisen die Copolymeren C) Molekulargewichte Mw (Gewichtsmittelwert) von 30 000 bis 500 000, bevorzugt 50 000 bis 250 000, insbesondere 70 000 bis 200 000 g/mol auf, bestimmt mittels GPC mit Tetrahydrofuran (THF) als Elutionsmittel und Polystyrol-Eichung.

Die Copolymeren C) dieser Ausführungsform lassen sich z.B. dadurch herstellen, dass man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion lässt sich im allgemeinen mit den üblichen Methoden initiieren wie Licht oder bevorzugt mit Radikalstartern wie Peroxiden z.B. Benzoylperoxid. Auch die thermisch initiierte Polymerisation ist möglich.

Daneben können die Copolymeren C) dieser Ausführungsform auch dadurch hergestellt werden, dass zunächst die Komponenten c1), c21) und gegebenenfalls c3) miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden, so dass die Einheiten c22) entstehen. Diese Reaktion wird in der

Regel in Gegenwart eines tertiären Amins als Katalysator bei Temperaturen von 80 bis 350°C ausgeführt.

Gemäß einer anderen bevorzugten Ausführungsform enthalten die Copolymere C) anstelle der Einheiten c21) oder c22) oder deren Mischungen Einheiten (c23), die sich von einem ungesättigten Monomeren ableiten, das eine Epoxygruppe enthält. Die Einheiten c23) können auch auf einer Mischung aus zwei oder mehr unterschiedlichen Monomeren dieser Art basieren. Die Monomeren können eine oder auch zwei oder mehr Epoxygruppen aufweisen. Besonders bevorzugt wird Glycidylmethacrylat alleine verwendet.

Zu den bevorzugten Copolymeren C) dieser Ausführungsform zählen:

Copolymere, enthaltend

c1) von 65 bis 85, bevorzugt von 70 bis 80 Gew.-% Styrol,
c23) von 0,5 bis10, bevorzugt von 1 bis 5 Gew.-% Glycidylmethacrylat und
c3) von 14,5 bis 34,5 Gew.-% , bevorzugt von 19 bis 29 Gew.-% Acrylnitril,

wobei sich die Anteile von c1) bis c3) zu 100 Gew.-% addieren.

Die Copolymeren C) dieser Ausführungsform können z.B. durch Suspensionspolymerisation in Polyvinylalkohol in Gegenwart eines peroxidischen Initiators hergestellt werden.

Die Copolymeren C) dieser Ausführungsform weisen in Regel Molekulargewichte (Gewichtsmittelwert $M_w$), im Bereich von 50 000 bis 1 000 000, bevorzugt von 70 000 bis 500 000 g/mol, bestimmt gemäß GPC mit THF als Elutionsmittel gegen Polystyrolstandard, auf.

Als Komponenten D) können die erfindungsgemäßen Formmassen 0 bis 70, vorzugsweise bis zu 40 Gew.-% weiterer Zusatzstoffe enthalten.

Als Komponente D) können die erfindungsgemäßen Formmassen 0 bis 3, bevorzugt 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 14 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als weitere Komponenten D) können die erfindungsgemäßen Formmassen Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen Formmassen zu 0,05 bis 3, vorzugsweise 0,1 bis 1,5 und insbesondere 0,1 bis 1 Gew.-% enthalten, vorzugsweise als Cu-(I)-Halogenid, insbesondere in Mischung mit einem Alkalihalogenid, vorzugsweise KJ, insbesondere im Verhältnis 1 : 4, oder eines sterisch gehinderten Phenols oder eines Aminstabilisators oder deren Mischungen enthalten.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

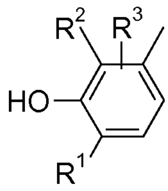

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

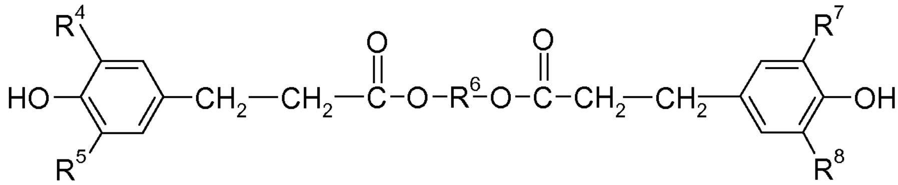

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

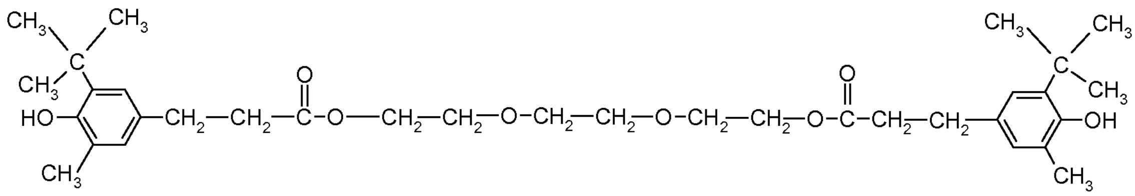

(Irganox® 245 der Firma Ciba-Geigy

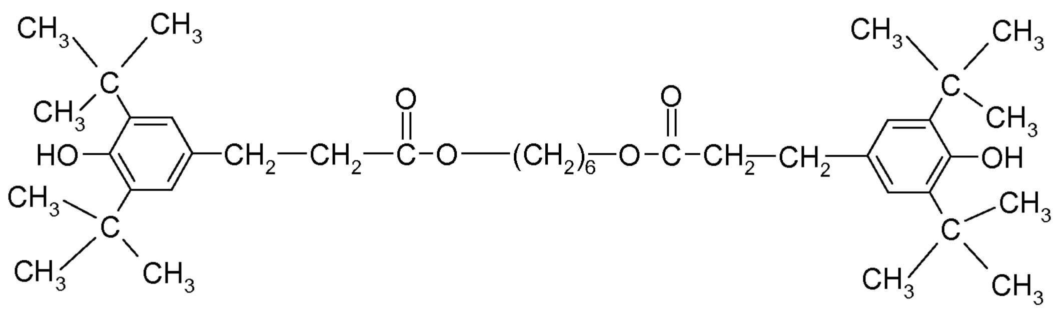

(Irganox® 259 der Firma Ciba-Geigy)

Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerithrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die phenolischen Antioxidantien, die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis D) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die aminischen Stabilisatoren können in den erfindungsgemäßen Formmassen von 0 bis 3, bevorzugt 0,01 bis 2, vorzugsweise 0,05 bis 1,5 Gew.-% eines Aminstabilisators enthalten sein. Vorzugsweise geeignet sind sterisch gehinderte Aminverbindungen. Es kommen z.B. Verbindungen der Formel

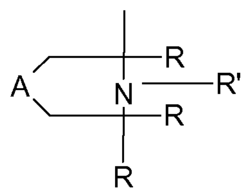

in Betracht, wobei

R gleiche oder verschiedene Alkylreste,
R' Wasserstoff oder einen Alkylrest und
A eine gegebenenfalls substituierte 2- oder 3-gliedrige Alkylenkette

bedeutet.

Bevorzugte Komponenten sind Derivate des 2,2,6,6-Tetramethylpiperidins wie:

4-Acetoxy-2,2,6,6-tetramethylpiperidin,
4-Stearoyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin
4-Phenoxy-2,2,6,6-tetramethylpiperidin,
4-Benzoxy-2,2,6,6-tetramethylpiperidin,
4-(Phenylcarbamoyloxy)-2,2,6,6-tetramethylpiperidin.

Ferner sind

Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,

Bis(1,2,2,6,6-pentamethyl-piperidyl)sebacat,
Bis(2,2,6,6-tetramethyl-4-piperidyl)terephthalat,
1,2-bis (2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-dipiperidyl)adipat und
Tris(2,2,6,6-tetramethyl-4-piperidyl)benzen-1,3,5-tricarboxylat geeignet.

Darüber hinaus sind höhermolekulare Piperidinderivate wie das Dimethylsuccinatpolymer mit 4-Hydroxy-2,2,6,6-tetramethyl-7-piperidinethanol oder Poly-6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino geeignet, welche wie Bis(2,2,6,6-tetramethyl-4-piperidyl)-sebazat besonders gut geeignet sind.

Derartige Verbindungen sind unter der Bezeichnung Tinuvin® oder Chimasorb® (eingetragenes Warenzeichen der Firma Ciba-Spezialitätenchemie GmbH) im Handel erhältlich.

Als weitere besondere bevorzugte Aminverbindung sei Uvinul® 4049 H der Firma BASF AG genannt:

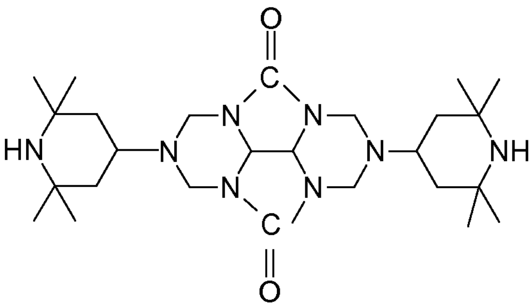

Besonders bevorzugte Beispiele für erfindungsgemäß einsetzbare Stabilisatoren sind auch solche auf der Basis sekundärer aromatischer Amine wie Addukte aus Phenylendiamin mit Aceton (Naugard® A), Addukte aus Phenylendiamin mit Linolen, Naugard® 445 (II), N,N'-Dinaphthyl-p-phenylendiamin (III), N-Phenyl-N'-cyclohexyl-p-phenylendiamin (IV) oder Mischungen von zwei oder mehreren davon

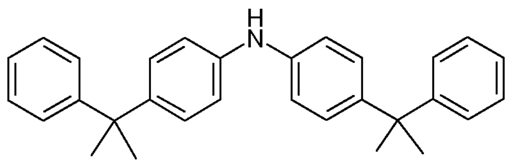

(II)

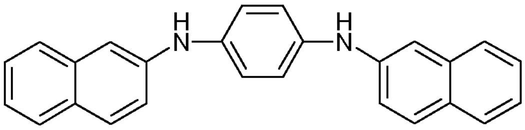

(III)

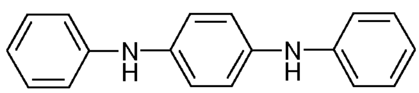

(IV)

Als faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 40 Gew.-%, insbesondere 1 bis 15 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$(X\text{-}(CH_2)_n)_k\text{-}Si\text{-}(O\text{-}C_mH_{2m+1})_{4-k}$

in der die Substituenten folgende Bedeutung haben:

X $NH_2$-,

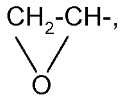 HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf die faserförmigen Füllstoffe) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 % . Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Insbesondere wird Talkum verwendet, welches ein hydratisiertes Magnesiumsilikat der Zusammensetzung $Mg_3[(OH)_2/Si_4O_{10}]$ oder 3 MgO 4 $SiO_2 \cdot H_2O$ ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 99,5 % < 20 μm beträgt. Die Teilchengrößenverteilung wird üblicherweise durch Sedimentationsanalyse bestimmt und beträgt vorzugsweise:

| | |
|---|---|
| < 20 μm | 99,5 Gew.-% |
| < 10 μm | 99 Gew.-% |
| < 5 μm | 85 Gew.-% |
| < 3 μm | 60 Gew.-% |
| < 2 μm | 43 Gew.-%. |

Derartige Produkte sind im Handel als Micro-Talc I.T. extra (Fa. Omya) erhältlich.

Als weitere Komponenten D) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Weiterhin sind Flammschutzmittel z.B. roter Phosphor einsetzbar.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis C) sowie gegebenenfalls D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert. Bevorzugt wird das Emulsionspolymerisat B) als feststoffhaltige Dispersion in die Schmelze von A) eingearbeitet.

Die erfindungsgemäßen thermoplastischen Formmassen zeichnen sich durch eine gute Zähigkeit (insbesondere eine gute Schädigungsarbeit) bei gleichzeitig guter UV-Stabilität und Wärmeformbeständigkeit aus.

Diese eignen sich zur Herstellung von Fasern, Folien und Formkörpern jeglicher Art. Nachfolgend sind einige bevorzugte Beispiele genannt:

Haushaltsartikel, elektronisch Bauteile, medizinische Geräte, Kfz-Bauteile.

Beispiele

Es wurden folgende Komponenten verwendet:

Komponente A:

Polyamid 6 mit einer Viskositätszahl VZ von 150 ml/g, gemessen als 0,5 gew.-%ige Lösung in 96 gew.-%iger Schwefelsäure bei 25°C nach ISO 307. (Es wurde Ultramid® B3 der BASF AG verwendet).

Komponente B1:

Die Komponente B1 wurde wie folgt hergestellt:

In einem 4 l-Vierhalskolben, ausgerüstet mit einem Anker-Rührer, Rückflusskühler und zwei Dosiereinrichtungen wurden bei 20 bis 25°C (Raumtemperatur) und unter Stickstoffatmosphäre 800 g entionisiertes Wasser, 39,70 g einer wässrigen Polystyrolsaat (Feststoffgehalt 33 Gew.-%, zahlenmittlerer Teilchendurchmesser 32 nm), 198,4 g 1-Octen, 3,28 g einer 50 gew.-%igen wässrigen Lösung von Emulgator K 30®, 19,65 g einer 20 gew.-%igen wässrigen Lösung von Emulgator Lutensol TO 20 und 19,65 g einer 7 gew.-%igen wässrigen Lösung von Natriumpersulfat vorgelegt und unter Rühren auf 90°C aufgeheizt. Beginnend bei 90°C wurde der Monomerzulauf, bestehend aus 600 g entionisiertem Wasser, 3,28 g einer 40 gew.-%igen wässrigen Lösung von

Emulgator K 30®, 19,65 g einer 20 gew.-%igen wässrigen Lösung von Emulgator Lutensol TO 20, 8,38 g einer 25 gew.-%igen wässrigen Lösung von Natriumhydroxid, 1076,82 g n-Butylacrylat, 26,20 g Acrylsäure und 10,48 g Allylmethacrylat und der Initiatorzulauf, bestehend aus 111,35 g einer 7 gew.-%igen wässrigen Lösung von Natriumpersulfat, gleichzeitig gestartet und der Monomerzulauf in 3 Stunden [in 2-Stufen-Fahrweise, 500 g in 0,5 Stunden (1000 g/Stunde) und 1245 g in 2,5 Stunden (498 g/Stunde)] und der Initiatorzulauf in 3,5 Stunden kontinuierlich zudosiert. Anschließend ließ man die erhaltene wässrige Polymerisatdispersion noch 2 Stunden bei 90°C nachreagieren. Danach wurde die wässrige Polymerisatdispersion auf Raumtemperatur abgekühlt und mit 65,5 g einer 10 gew.-%igen wässrigen Lösung von Natriumhydroxid versetzt. Die wässrige Polymerisatdispersion wies einen Feststoffgehalt von 44 Gew.-%, bezogen auf das Gesamtgewicht der wässrigen Dispersion, auf. Die Glasübergangstemperatur des Polymerisats betrug -42°C. Die Polymerpartikelgröße betrug 105 nm. Durch Abziehen von Wasser im Vakuum wurde der Feststoffgehalt auf 49 % erhöht.

Komponente BV1:

Ethylen n-Butylacrylat-Acrylsäure-Copolymer, z.B. Lupolen® KR 1270 der BASF AG.

Komponente BV2:

Kern-Schale-Modifier Paraloid® EXL 3300 der Fa. Rohm & Haas, bestehend aus einem Kern aus n-Butylacrylat und einer Pfropfhülle aus MMA (Verhältnis 70/30).

Komponente C:

Terpolymer auf Basis von Styrol/Acrylnitril/Maleinsäureanhydrid (75/24,1/0,9), Viskositätszahl 80 ml/g (gemessen in 0,5 %iger DMF-Lösung bei 25°C) nach DIN 53728.

Komponente D:

Talk, z.B. Talkum IT-Extra der Fa. Omya.

Herstellung und Prüfung der Formmassen

Die Viskositätszahl der Polyamide wurde nach DIN 53 727 an 0,5 gew.-%igen Lösung in 96 Gew.-% Schwefelsäure bestimmt.

Der Feststoffgehalt wurde bestimmt, indem eine definierte Menge der wässrigen Polymerisatdispersion (ca. 5 g) bei 140°C in einem Trockenschrank bis zur Gewichtskonstanz getrocknet wurde. Es wurden zwei separate Messungen durchgeführt. Der im Beispiel angegebene Wert stellt den Mittelwert der beiden Messergebnisse dar.

Die Bestimmung der Glasübergangstemperatur erfolgte gemäß DIN 53 765 mittels eines DSC 820-Gerätes, Serie TA 8000 der Fa. Mettler-Toledo.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 k je Stunde, an Normkleinstäben ermittelt.

Die Schädigungsarbeit wurde nach ISO 6603 an Platten (60*60*3 mm) bestimmt. Die UV-Lagerung wurde nach der PV 1303 der Volkswagen AG durchgeführt.

Die Fließfähigkeit wurde nach ISO 1133 bei 240°C und 5 kg Belastung bestimmt.

Die Komponenten wurden in einem Zweiwellenextruder bei einer Massetemperatur von 240 bis 260°C gemischt. Dabei wurde die Emulsion der Komponente B1 in die Schmelze von Komponente A dosiert. Das Wasser wurde über zwei Vakuumsentgasungen entfernt. Die Schmelze wurde durch ein Wasserbad geleitet und granuliert.

Die Ergebnisse der Prüfungen sind in Tabelle 1 aufgeführt.

Tabelle 1:

| Formmasse | V1 | V2 | 3 | V4 | 5 | V6 | 7 |
|---|---|---|---|---|---|---|---|
| A | 80 | 80 | 80 | 75 | 75 | 70 | 70 |
| B1 | - | - | 20 | - | 20 | - | 20 |
| BV1 | 20 | - | - | 20 | - | 20 | - |
| BV2 | - | 20 | - | - | - | - | - |
| C | - | - | - | 5 | 5 | - | - |
| D | - | - | - | - | - | 10 | 10 |
| [°C] | 156 | 157 | 162 | 154 | 163 | 153 | 161 |
| MVI [ml/10’] | 16,5 | 16,4 | 11,7 | 11,2 | 9,1 | 14,3 | 10,5 |
| Ws, RT, 0 h [Nm] | 80 | 43 | 84 | 71 | 73 | 67 | 78 |
| Ws, 500 h [Nm] | 34 | 34 | 76 | 29 | 65 | 23 | 71 |
| Ws, 1000 h [Nm] | 27 | 23 | 73 | 17 | 61 | 15 | 67 |
| Ws, -30°C [Nm] | 67 | 11 | 79 | 56 | 60 | 45 | 55 |

**Patentansprüche**

1. Thermoplastische Formmassen, enthaltend

   A) 10 bis 95 Gew.-% eines thermoplastischen Polyamides,
   B) 5 bis 90 Gew.-% eines Acrylatkautschukes, erhältlich durch radikalisch initiierte wässrige Emulsionspolymerisation von ethylenisch ungesättigten Monomeren in Anwesenheit wenigstens eines Dispergiermittels und wenigstens eines Radikalinitiators, wobei zur Emulsionspolymerisation

| | |
|---|---|
| 1 bis 50 Gew.-% | eines 5 bis 12 C-Atome aufweisenden Alkens [Monomer A], und |
| 50 bis 99 Gew.-% | eines Esters auf Basis einer 3 bis 6 C-Atome aufweisenden α,β-monoethylenisch ungesättigten Mono- oder Dicarbonsäure und eines 1 bis 12 C-Atome aufweisenden Alkanols [Monomer B], sowie gegebenenfalls |
| bis 10 Gew.-% | einer 3 bis 6 C-Atome aufweisenden α,β-monoethylenisch ungesättigten Mono- oder Dicarbonsäure und/oder deren Amid [Monomer C] und |
| bis 30 Gew.-% | einer sich von den Monomeren A bis C unterscheidenden α,β-ethylenisch ungesättigten Verbindung [Monomer D], |

   eingesetzt werden und sich die Monomeren A bis D zu 100 Gew.-% addieren,
   C) 0 bis 40 Gew.-% eines Copolymerisates, welches vinylaromatische Monomereinheiten enthält,
   D) 0 bis 70 Gew.-% weiterer Zusatzstoffe,

   wobei die Summe der Gewichtsprozente A) bis D) 100 % ergibt.

2. Thermoplastische Formmassen nach Anspruch 1, wobei der Acrylatkautschuk B durch Emulsionspolymerisation von

| | |
|---|---|
| 1 bis 49,99 Gew.-% | Monomer A, und |
| 50 bis 98,99 Gew.-% | Monomer B, sowie |
| 0,01 bis 10 Gew.-% | Monomer C |

   erhältlich ist.

3. Thermoplastische Formmassen nach den Ansprüchen 1 oder 2, wobei,als Monomer A des Acrylatkautschukes B) ein 1-Alken eingesetzt wird.

4. Thermoplastische Formmassen nach den Ansprüchen 1 bis 3, wobei als Monomer B ein Ester auf Basis einer 3 oder 4 C-Atome aufweisenden α,β-monoethylenisch ungesättigten Mono- oder Dicarbonsäure und eines 1 bis 8 C-Atome aufweisenden Alkanols eingesetzt wird.

5. Thermoplastische Formmassen nach den Ansprüchen 1 bis 4, enthaltend

   A) 20 bis 94 Gew.-% eines thermoplastischen Polyamids,
   B) 5 bis 40 Gew.-% eines Acrylatkautschuks gemäß Anspruch 1,
   C) 1 bis 30 Gew.-% eines Copolymerisates gemäß Anspruch 1,
   D) 0 bis 40 Gew.-% weiterer Zusatzstoffe.

6. Verwendung der thermoplastischen Formmassen gemäß den Ansprüchen 1 bis 5 zur Herstellung von Fasern, Folien und Formkörpern.

7. Formkörper erhältlich aus den thermoplastischen Formmassen gemäß den Ansprüchen 1 bis 5.

**Claims**

1. A thermoplastic molding composition, comprising

A) from 10 to 95% by weight of a thermoplastic polyamide,
B) from 5 to 90% by weight of an acrylate rubber, obtainable via free-radical-initiated aqueous emulsion polymerization of ethylenically unsaturated monomers in the presence of at least one dispersing agent and of at least one free-radical initiator, where the emulsion polymerization uses

| | |
|---|---|
| from 1 to 50% by weight | of an alkene having from 5 to 12 carbon atoms [monomer A], and |
| from 50 to 99% by weight | of an ester based on an $\alpha,\beta$-monoethylenically unsaturated mono- or dicarboxylic acid having from 3 to 6 carbon atoms and on an alkanol having from 1 to 12 carbon atoms [monomer B], and also, optionally, |
| up to 10% by weight | of an $\alpha,\beta$-monoethylenically unsaturated mono- or dicarboxylic acid having from 3 to 6 carbon atoms and/or its amide [monomer C], and |
| up to 30% by weight | of an $\alpha,\beta$-ethylenically unsaturated compound different from the monomers A to C [monomer D], |

and the monomers A to D give a total of 100% by weight,
C) from 0 to 40% by weight of a copolymer which comprises vinylaromatic monomer units,
D) from 0 to 70% by weight of further additives,

where the total of the percentages by weight of A) to D) is 100%.

**2.** The thermoplastic molding composition according to claim 1, where the acrylate rubber B is obtainable via emulsion polymerization of
from 1 to 49.99% by weight of monomer A, and
from 50 to 98.99% by weight of monomer B, and also
from 0.01 to 10% by weight of monomer C.

**3.** The thermoplastic molding composition according to claim 1 or 2, where a 1-alkene is used as monomer A of the acrylate rubber B).

**4.** The thermoplastic molding composition according to claims 1 to 3, where an ester based on an $\alpha,\beta$-monoethylenically unsaturated mono- or dicarboxylic acid having 3 or 4 carbon atoms and on an alkanol having from 1 to 8 carbon atoms is used as monomer B.

**5.** The thermoplastic molding composition according to claims 1 to 4, comprising

A) from 20 to 94% by weight of a thermoplastic polyamide,
B) from 5 to 40% by weight of an acrylate rubber according to claim 1,
C) from 1 to 30% by weight of a copolymer according to claim 1,
D) from 0 to 40% by weight of further additives.

**6.** The use of the thermoplastic molding compositions according to claims 1 to 5 for production of fibers, of foils, and of moldings.

**7.** A molding obtainable from the thermoplastic molding compositions according to claims 1 to 5.

## Revendications

**1.** Masses de moulage thermoplastiques, contenant

A) 10 à 95% en poids d'un polyamide thermoplastique,
B) 5 à 90% en poids d'un caoutchouc d'acrylate, pouvant être obtenu par polymérisation en émulsion aqueuse initiée par voie radicalaire de monomères éthyléniquement insaturés en présence d'au moins un dispersant et d'au moins un initiateur de radicaux, où, pour la polymérisation en émulsion, on utilise

| | |
|---|---|
| 1 à 50% en poids | d'un alcène présentant 5 à 12 atomes de carbone [monomère A] et |
| 50 à 99% en poids | d'un ester à base d'un acide monocarboxylique ou dicarboxylique éthyléniquement α,ß-monoinsaturé présentant 3 à 6 atomes de carbone et d'un alcanol présentant 1 à 12 atomes de carbone [monomère B] ainsi que, le cas échéant |
| jusqu'à 10% en poids | d'un acide monocarboxylique ou dicarboxylique éthyléniquement α,ß-monoinsaturé comprenant 3 à 6 atomes de carbone et/ou son amide [monomère C] |
| jusqu'à 30% en poids | d'un composé éthyléniquement α,ß-insaturé différent des monomères A à C [monomère D], |

et les monomères A à D forment 100% en poids au total,
C) 0 à 40% en poids d'un copolymère, qui contient des unités monomères aromatiques de vinyle,
D) 0 à 70% en poids d'autres additifs, la somme des % en poids A) à D) valant 100%.

**2.** Masses de moulage thermoplastiques selon la revendication 1, le caoutchouc d'acrylate B pouvant être obtenu par polymérisation en émulsion de

| | |
|---|---|
| 1 à 49,99% en poids | de monomère A et |
| 50 à 98,99% en poids | de monomère B ainsi que |
| 0,01 à 10% en poids | de monomère C. |

**3.** Masses de moulage thermoplastiques selon les revendications 1 ou 2, un 1-alcène étant utilisé comme monomère A du caoutchouc d'acrylate B).

**4.** Masses de moulage thermoplastiques selon les revendications 1 à 3, un ester à base d'un acide monocarboxylique ou dicarboxylique éthyléniquement α,ß-monoinsaturé présentant 3 ou 4 atomes de carbone et d'un alcanol présentant 1 à 8 atomes de carbone étant utilisé comme monomère B.

**5.** Masses de moulage thermoplastiques selon les revendications 1 à 4, contenant

A) 20 à 94% en poids d'un polyamide thermoplastique,
B) 5 à 40% en poids d'un caoutchouc d'acrylate selon la revendication 1
C) 1 à 30% en poids d'un copolymère selon la revendication 1
D) 0 à 40% en poids d'autres additifs.

**6.** Utilisation des masses de moulage thermoplastiques selon les revendications 1 à 5 pour la production de fibres, de feuilles et de corps moulés.

**7.** Corps moulés pouvant être obtenus à partir des masses de moulage thermoplastiques selon les revendications 1 à 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005046692 A
- US 2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- EP 299444 A
- EP 129195 A
- EP 129196 A
- DE 4003422 A
- US 4269749 A
- US 2520959 A
- US 3397165 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- DE 2702661 A
- US 4360617 A


### In der Beschreibung aufgeführte Nicht-Patentliteratur


- **S. WU.** *Polym. Eng. Sci.,* 1987, vol. 27, 335
- **R. GAYMANS.** Polymer Blends. 2000, vol. 2, 177-224
- **C.A. CRUZ-RAMOS.** Polymer Blends. 2000, vol. 2, 137-175
- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **J. BRANDRUP ; E.H. IMMERGUT.** Polymer Handbook. John Wiley & Sons, 1989, 133-141
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, vol. 1, 123
- Ullmann's Encyclopädie der technischen Chemie. Verlag, 1980, vol. 19, 18
- **J. BRANDRUP ; E.H. IMMERGUT.** Polymer Handbook. J. Wiley
- POLYMER HANDBOOK. J. Wiley, 1975
- POLYMER HANDBOOK. J. Wiley, 1989
- Ullmann's Cncyclopedia of Industrial Chemistry. Verlag Chemie, 169
- Analysis of Polymer Dispersions with an Eight-Cell-AUC-Multiplexer: High Resolution Particle Size Distribution and Density Gradient Techniques. **S.E. HARDING ; W. MÄCHTLE et al.** Analytical Ultracentrifugation in Biochemistry and Polymer Science. Royal Society of Chemistry, 1992, 147-175